# EUROPÄISCHE PATENTANMELDUNG

(11) **EP 1 808 343 A1**
(43) Veröffentlichungstag der Anmeldung: **18.07.2007**
(21) Anmeldenummer: 06124669.0
(22) Anmeldetag: 23.11.2006
(51) Int. Cl.: B60R 21/34, B60R 21/0132

(54) **Vorrichtung zur Ansteuerung von Fußgängerschutzmitteln**

(30) Priorität: 11.01.2006 DE 102006001365
(71) Anmelder: ROBERT BOSCH GMBH, 70442 Stuttgart (DE)
(72) Erfinder: Wellhoefer, Matthias, 70499, Stuttgart (DE); Steinkogler, Sascha, 79106, Freiburg (DE)

(57) **Zusammenfassung**

Es wird eine Vorrichtung zur Ansteuerung von Fußgängerschutzmitteln vorgeschlagen, die eine Beschleunigungssensorik (BS1,BS2) hinter der Stoßfängerverkleidung aufweist und auch eine Geschwindigkeitsmesseinrichtung (ESP) umfasst. In Abhängigkeit von Signalen der Beschleunigungssensorik und der Geschwindigkeitsmesseinrichtung steuert eine Auswerteschaltung die Fußgängerschutzmittel an. Die Auswerteschaltung unterdrückt jedoch die Ansteuerung, wenn das Signal der Geschwindigkeitsmesseinrichtung unter einem vorgegebenen Schwellenwert liegt.

## Beschreibung

### Stand der Technik

Die Erfindung geht aus von einer Vorrichtung zur Ansteuerung von Fußgängerschutzmitteln nach der Gattung des unabhängigen Patentanspruchs.

Aus DE 10334699 A1 ist es bereits bekannt, bei einem Fußgängerschutzsystem die Eigengeschwindigkeit des Fahrzeugs zu berücksichtigen. Dort wird die Eigengeschwindigkeit insbesondere beim Betätigen der Fronthaube berücksichtigt.

### Offenbarung der Erfindung

Die erfindungsgemäße Vorrichtung zur Ansteuerung von Fußgängerschutzmitteln mit den Merkmalen des unabhängigen Patentanspruchs hat dem gegenüber den Vorteil, dass, wenn eine niedrige Eigengeschwindigkeit vorliegt, die unterhalb einer vorgegebenen Schwelle liegt, das Fußgängerschutzsystem deaktiviert wird, da bei solchen Situationen unterhalb dieser vorgegebenen Schwelle der Einsatz des Fußgängerschutzsystems nicht sinnvoll ist. Damit kann mit einer höheren Robustheit das Fußgängerschutzsystem entworfen werden und eine Fehlauslösung im unteren Geschwindigkeitsbereich wird vollständig vermieden und ausgeschlossen. Weiterhin kann unterbunden werden, dass die Vorrichtung zur Ansteuerung von Fußgängerschutzmitteln nicht mutwillig oder unabsichtlich im stillstehenden Zustand des Fahrzeugs von außen durch eine Fehlauslösung, beispielsweise einem Fußtritt oder einem Fußball gegen den Stoßfänger oder einem Parkrempler, aktiviert wird. Insbesondere bei nicht reversiblen Fußgängerschutzmitteln ist dies ein großer Vorteil, so wird eine Fehlauslösung eines Fußgängeraußenairbags mit 100%iger Sicherheit bei Aufprallgeschwindigkeiten von unter 20 km/h unterbunden, was deutlich Reparaturkosten spart. Die Schwelle wird entweder fest vorgegeben, wie hier mit 20 km/h, oder sie wird aus Daten, wie der Eigengeschwindigkeit selbst berechnet.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Fußgängerschutzmitteln möglich.

Besonders vorteilhaft ist, dass bei der Ansteuerung der Fußgängerschutzmittel durch die Auswerteschaltung beispielsweise ein Mikrocontroller in einem Steuergerät zusätzlich ein zeitlicher Verlauf des Geschwindigkeitssignals berücksichtigt wird. Damit können insbesondere Bremsvorgänge oder Beschleunigungsvorgänge erkannt werden, sodass auf einen sinnvollen Einsatz der Fußgängerschutzmittel geschlossen werden kann. Es ist relativ unwahrscheinlich, dass ein Fußgänger nahezu ungebremst bei einer mäßig hohen Geschwindigkeit überfahren wird. Dies kann dadurch vorteilhafter Weise erkannt werden. Weiterhin ist es möglich, dass die Auswerteschaltung mit einer Bremseinrichtung, beispielsweise einem Bremsassistenten oder einem ABS-System (Antiblockiersystem) gekoppelt ist, sodass die Auswerteschaltung in Abhängigkeit von einem dritten Signal der Bremseinrichtung die Fußgängerschutzmittel ansteuert. Auch die Kopplung mit einer Fahrdynamikregelung ist in gleicher Weise möglich.

### Zeichnung

Ausführungsbeispiele der Erfindung sind in der Zeichnung dargestellt und werden in der nachfolgenden Beschreibung näher erläutert.

Es zeigen:
- Figur 1: ein Blockschaltbild der erfindungsgemäßen Vorrichtung,
- Figur 2: ein weiteres Blockschaltbild und
- Figur 3: ein Flussdiagramm.

### Beschreibung

Es wird erfindungsgemäß vorgeschlagen, bei einer Fahrzeugeigengeschwindigkeit unterhalb einer vorgegebenen Schwelle das Fußgängerschutzsystem zu deaktivieren. Die Eigengeschwindigkeit wird am einfachsten über den CAN-Bus abgegriffen, beispielsweise weist ein Airbagsteuergerät eine CAN-Schnittstelle auf. Die Eigengeschwindigkeit wird durch Geschwindigkeitsmesssysteme im Fahrzeug ermittelt, beispielsweise dem Tachometer, eine Raddrehzahlmesseinrichtung bzw. durch eine Fahrdynamikregelung. Insbesondere ist es vorteilhaft, diese Geschwindigkeit für eine Adaption des Fußgängerschutzsystems zu nutzen. Dabei kann auch zusätzlich Information über den Bremsvorgang, beispielsweise die Betätigung des Bremspedals, Bremsvorgang, automatische Notbremsung mit verwendet werden:

Wird das Bremspedal betätigt, insbesondere wird sehr stark aktiv gebremst, besteht eine erhöhte Kollisionsgefahr mit einem Objekt, da der Fahrer eine potentielle Gefahrensituation erkannt hat. Sobald die Bremse betätigt wird, wird der CAN-Geschwindigkeitsverlauf genau verfolgt und mit den Eingangsgrößen der Fußgängerschutzsensorik, also der Beschleunigungssensorik in Bezug gebracht. Wird beim Kontaktzeitpunkt festgestellt, dass der Bremsvorgang schon soweit fortgeschritten ist, dass die Fahrzeuggeschwindigkeit zum Zeitpunkt des Anpralls schon kleiner als die vorher festgelegte Schwelle ist, so wird trotz des Anpralls die Fußgängerschutzaktuatorik deaktiviert, während die übrigen Personenschutzmittel wie Airbags und Gurtstraffer weiter aktiv bleiben, da das Objekt auch ein anderes Fahrzeug mit einer ebenso hohen Eigengeschwindigkeit sein kann. Je nach dem wie hoch die Eigengeschwindigkeit beim Aufprallzeitpunkt ist, z. B. über 40 km/h kann die Applikation, z. B. die Einstellung der Auslöseschwellen im Fußgängerschutzalgorithmus geschwindigkeitsabhängig angepasst werden. Bei höheren Eigengeschwindigkeiten sind die Schwellen für das Fußgängerschutzsystem eher niedriger einzustellen, während die Schwellen bei niedrigen Eigengeschwindigkeiten höher liegen können, da man mehr Zeit hat, das Signal oder eine vom Signal abgeleitete Größe, beispielsweise ein Integral auf den zeitlichen Verlauf hin zu untersuchen und damit eine differenzierte Möglichkeit, die Signale oder Größen zu klassifizieren. D. h. man kann auch die Entscheidung und/ oder die Auslösezeit geschwindigkeitsabhängig anpassen.

Besitzt das Fahrzeug eine hohe Eigengeschwindigkeit und es wird eine Kollision durch die Beschleunigungssensorik erkannt, wird zusätzlich geprüft, ob die Bremse betätigt wurde. Ist dies nicht der Fall, so ist eine Kollision mit einem Fußgänger sehr unwahrscheinlich, denn das Objekt, welches das schwache Kontaktsignal erzeugt hat, kann beispielsweise ein Karton oder ein Vogel gewesen sein. Es ist äußerst unwahrscheinlich, dass ein Fahrer bei einer bestimmten Geschwindigkeit ungebremst umfährt, sodass man diesen Umstand in die Anpassung der Auslöseschwellen einfließen lassen kann. Würde ein derartiger Fall detektiert, so kann zunächst die Fußgängerschutzaktuatorik zurückgehalten werden. In diesem Fall werden die Beschleunigungssensoren im Frontbereich genauestens überwacht. Zeigen sie kein nennenswertes Signal, so wird nichts ausgelöst, da es sich um einen Vogel oder ein ähnliches Objekt handelt. Detektieren die Beschleunigungssensoren unmittelbar nach dem Kontakt eine merkliche Verzögerung im Deformationsbereich des Frontends, so kann sicherheitshalber zumindest das reversible System des Fußgängerschutzsystems ausgelöst werden, also beispielsweise die Fronthaube.

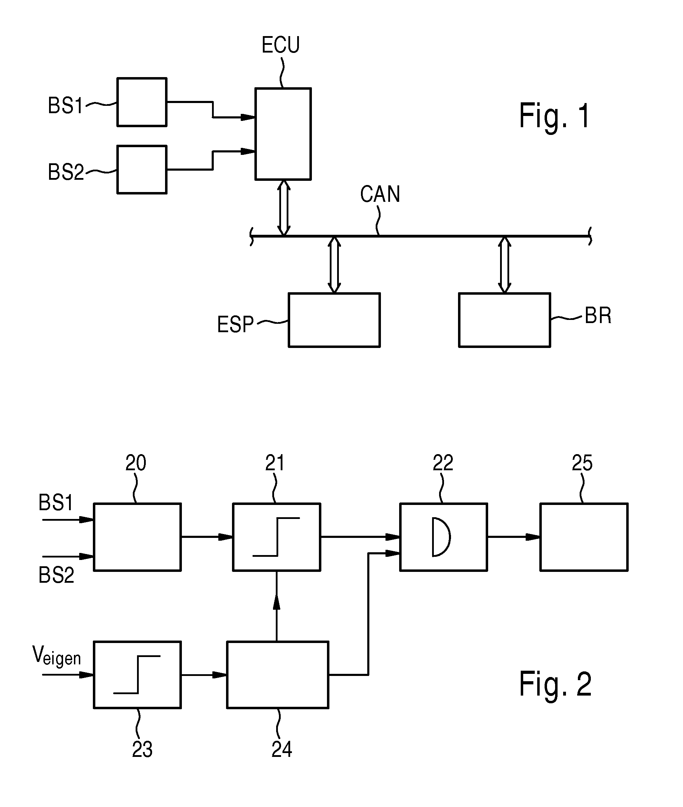

Figur 1 zeigt in einem Blockschaltbild die erfindungsgemäße Vorrichtung. Zwei Beschleunigungssensoren BS1 und BS2, die hinter der Stoßfängerverkleidung angeordnet sind, sind an ein Steuergerät ECU angeschlossen. Im Steuergerät ECU befindet sich als die Auswerteschaltung ein Mikrocontroller, der die Signale der Beschleunigungssensoren BS 1 und BS2 verarbeitet und in Abhängigkeit davon entscheidet, ob Fußgängerschutzmittel, die hier nicht dargestellt sind, anzusteuern sind. Der Mikrocontroller kann dazu Analogeingänge aufweisen oder die Beschleunigungssensoren BS1 und BS2 geben digitale Signale bereits aus.

Das Steuergerät ECU kann das Airabgsteuergerät sein. Für diesen Ansteuerungs- oder Auslösealgorithmus benutzt das Steuergerät ECU Daten, die sich auf dem CAN-Bus CAN befinden. Dazu weist das Steuergerät ECU eine Schnittstelle auf, über die über einen Datenein/-ausgang der CAN-Bus CAN an das Steuergerät ECU gekoppelt ist. An den CAN-Bus CAN sind weiterhin eine Fahrdynamikregelung ESP und ein Bremssystem BR angeschlossen. Auf dem CAN-Bus ist die Eigengeschwindigkeitsinformation vorhanden, die entweder über die Fahrdynamikregelung ESP oder Radrehzahlsensoren oder Tachometer zur Verfügung steht. Ist die Fahrzeugeigengeschwindigkeit unter einer vorgegebenen Schwelle, beispielsweise 20 km/h, dann unterdrückt das Steuergerät ECU eine Ansteuerungsentscheidung, die durch die Signale der Beschleunigungssensoren BS1 und BS2 notwendig wurde.

Figur 2 zeigt in einem Blockschaltbild den Signalflussverlauf. Die Beschleunigungssignale der Sensoren BS1 und BS2 gehen in eine Recheneinheit 20 ein, die diese Signale beispielsweise filtert, aufsummiert oder integriert. Die daraus entstehenden Signale oder das Signal werden einem Schwellwertschalter 21 zugeführt. Die Schwelle dieses Schwellwertschalters 21 kann adaptiv ausgelegt sein. Wird die Schwelle übertroffen, dann zeigt dies auf eine Ansteuerung der Fußgängerschutzmittel hin. Das entsprechende Ausgangssignal ist an ein UND-Gatter 22 angeschlossen. Erfindungsgemäß wird zusätzlich die Eigengeschwindigkeit *V_{eigen}* berücksichtigt. Auch die Geschwindigkeit *V_{eigen}* wird einem Schwellwertschalter 23 zugeführt, um festzustellen, ob die Eigengeschwindigkeit überhaupt über der unteren Schwelle liegt, denn liegt sie darunter, dann wird an das UND-Gatter als weiteres Signal ein solches Signal abgegeben, sodass es zu keiner Ansteuerung der Fußgängerschutzmittel kommt. Übertrifft jedoch die Eigengeschwindigkeit *V_{eigen}* die Schwelle gemäß dem Schwellwertschalter 23, dann wird in dem Block 24 die Eigengeschwindigkeit ausgewertet, um beispielsweise die Schwelle für den Schwellwertschalter 21 zu adaptieren. Auch der Verlauf der Eigengeschwindigkeit über der Zeit kann hier ausgewertet werden und zur Anpassung der Schwelle des Schwellwertschalters 21 verwendet werden. Im Übrigen wird dann an das UND-Gatter 22 ein Freigabesignal gegeben. Zeigt dann der Schwellwertschalter 21 das Ansteuerungssignal ebenfalls an, dann kommt es am Ausgang des UND-Gatters 22 zu einer logischen 1 und damit kann im Gatter 25 die Ansteuerung der Fußgängerschutzmittel erfolgen.

Auch die Schwelle des Schwellwertschalters 23 kann adaptiv, beispielsweise auch in Abhängigkeit der Eigengeschwindigkeit oder davon abgeleiteter Signale verändert werden. Auch die Signale eines Bremssystems können zur Veränderung der Schwelle zumindest des Schwellwertschalters 21 verwendet werden. Die in Figur 1 dargestellten Blöcke sind allesamt im Mikrocontroller, also der Auswerteschaltung in dem Steuergerät ECU implementiert. Es ist möglich, die Funktionen, die in Figur 2 dargestellt sind, auf mehrere Schaltungsteile zu verteilen.

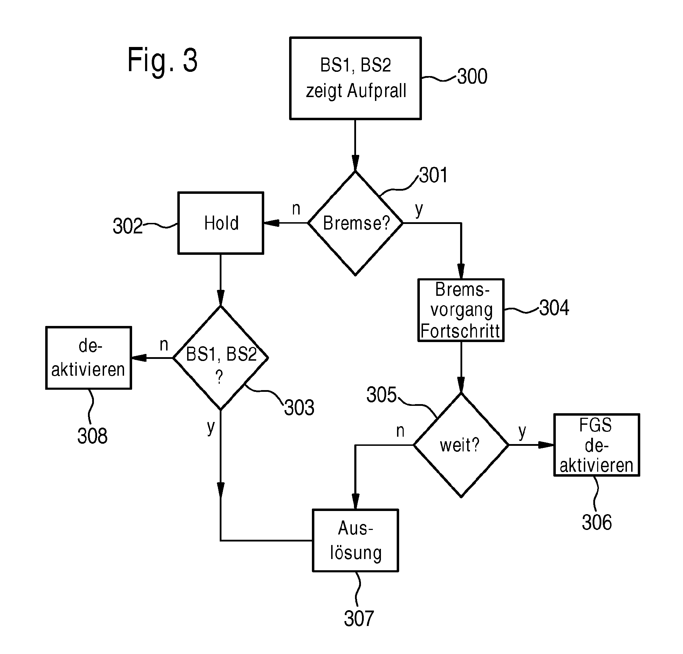

Figur 3 zeigt in einem Flussdiagramm einen erfindungsgemäßen Verlauf, den die erfindungsgemäße Vorrichtung nehmen kann. In Verfahrensschritt 300 werden die Signale der Beschleunigungssensoren BS1 und BS2 gemäß dem oben genannten ausgewertet und es zeigt sich, dass ein Aufprall vorliegt. Wurde in Verfahrensschritt 301 erkannt, dass die Bremse nicht betätigt wurde, dann wird in Verfahrensschritt 302 die

Auslösung des Fußgängerschutzsystems zurückgehalten. Zudem wird in Verfahrensschritt 303 geprüft, ob die Signale der Beschleunigungssensoren BS1 und BS2 einen nennenswerten Aufprall zeigen, sie müssen also über einer vorgegebenen Schwelle liegen. Ist dies der Fall, dann kann es in Verfahrensschritt 307 zur Auslösung zumindest der reversiblen Fußgängerschutzmittel führen. Der Grad der Auslösung kann dabei auch an der Höhe der Signale fest gemacht werden. Auch die Signalform kann hier Einfluss nehmen. Zeigen jedoch die Beschleunigungssensoren BS1 und BS2 keine nennenswerte Signale, dann wird in Verfahrensschritt 308 das Fußgängerschutzsystem deaktiviert.

Wurde in Verfahrensschritt 301 festgestellt, dass die Bremse aktiviert wurde, dann wird in Verfahrensschritt 304 geprüft, wie weit der Bremsvorgang fortgeschritten ist. Wurde in Verfahrensschritt 305 erkannt, dass dieser Bremsvorgang schon sehr weit fortgeschritten ist, dann wird in Verfahrensschritt 306 das Fußgängerschutzsystem deaktiviert, da dann die Auslösung der Fußgängerschutzmittel keinen Sinn mehr macht. Ist der Bremsvorgang jedoch noch nicht so weit fortgeschritten, dann wird ebenfalls in Verfahrensschritt 307 eine Auslösung der Fußgängerschutzmittel vorgenommen.

Der Bremsvorgang kann in seinem Fortschritt anhand einer Information vom ESP-Steuergerät, also dem Steuergerät zur Fahrdynamikregelung überwacht werden. Dabei wird der Stand des Bremspedals anhand beispielsweise eines Sensors oder Sensorschalters überwacht. Alternativ ist es möglich die Raddrehzahl anhand von Raddrehzahlsensoren zu überwachen und anhand der Signale der Raddrehzahlsensoren auf den Fortschritt des Bremsvorgangs zu schließen.

## Patentansprüche

1. Vorrichtung zur Ansteuerung von Fußgängerschutzmitteln mit:
- einer Beschleunigungssensorik (BS1, BS2), die hinter der Stoßfängerverkleidung angeordnet ist und die wenigstens ein erstes Signal erzeugt
- einer Geschwindigkeitsmesseinrichtung (ESP), die ein zweites Signal erzeugt
- einer Auswerteschaltung, die die Fußgängerschutzmittel in Abhängigkeit von dem wenigstens einen ersten Signal und dem zweiten Signal ansteuert, wobei die Auswerteschaltung die Ansteuerung unterdrückt, wenn das zweite Signal unter einem vorgegebenen Schwellenwert liegt.

2. Vorrichtung nach Anspruch 1, **dadurch gekennzeichnet, dass** die Auswerteschaltung derart konfiguriert ist, dass die Auswerteschaltung die Fußgängerschutzmittel zusätzlich in Abhängigkeit von einem zeitlichen Verlauf des zweiten Signals ansteuert.

3. Vorrichtung nach Anspruch 1 oder 2, **dadurch gekennzeichnet, dass** die Auswerteschaltung derart mit einer Bremseinrichtung (BR) gekoppelt ist, dass die Auswerteschaltung in Abhängigkeit von einem dritten Signal der Bremseinrichtung (BR) die Fußgängerschutzmittel ansteuert.
